Europäisches Patentamt

**European Patent Office**

**Office européen des brevets**

(19)

(11) Veröffentlichungsnummer: **0 203 168**
**B1**

(12) **EUROPÄISCHE PATENTSCHRIFT**

(45) Veröffentlichungstag der Patentschrifft:
28.02.90

(51) Int. Cl. ⁵: **G 03 B 23/02**

(21) Anmeldenummer: **86900086.9**

(22) Anmeldetag: **12.11.85**

(86) Internationale Anmeldenummer:
**PCT/EP 85/00609**

(87) Internationale Veröffentlichungsnummer:
**WO 86/03023 (22.05.86 Gazette 86/11)**

(54) BEHÄLTER FÜR EINEN BLATTSTAPEL.

(30) Priorität: **13.11.84 DE 3441464**

(43) Veröffentlichungstag der Anmeldung:
**03.12.86 Patentblatt 86/49**

(45) Bekanntmachung des Hinweises auf die Patenterteilung:
**28.02.90 Patentblatt 90/09**

(84) Bennante Vertragsstaaten:
**AT BE CH DE FR GB IT LI NL SE**

(56) Entgegenhaltungen:
**DE-A-2 833 410**
**DE-A-3 342 238**
**FR-A-2 403 574**
**US-A-4 376 348**

(73) Patentinhaber: **Licinvest AG**
**Hartbertstrasse 9**
**CH-7002 Chur (CH)**

(72) Erfinder: **ACKERET, Peter**
**Allmendstrasse 18**
**CH-8700 Küsnacht (CH)**

(74) Vertreter: **Röhl, Wolf Horst, Dipl.-Phys., Dr.**
**Dipl.-Ing. K. Sparing Dipl.-Phys. Dr. W.H. Röhl**
**Rethelstrasse 123**
**D-4000 Düsseldorf 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBERGRAF, STOCKHOLM 1990

2

## Beschreibung

Die Erfindung betrifft einen Behälter für einen Stapel im wesentlichen rechteckiger Blätter. Ein solcher, als Blattwechsler ausgebildeter Behälter mit den im Oberbegriff des Patentanspruchs 1 genannten Merkmalen ist in der US-PS-4 376 348 offenbart. - Der bekannte Behälter umfaßt ein Gehäuse mit einem Sichtfenster, aus dem ein den Blattstapel tragender Schieber in einer Richtung parallel zur Sichtfensterebene herausziehbar und wieder einschiebbar ist. Bei jedem Hin- und Hergang des Schiebers wird an einer Stapelseite ein Blatt abgezogen und am andern Ende des Stapels diesem wieder zugefügt, so daß durch die Relativbewegungen von Gehäuse und Schieber der Stapel zyklisch umgeschichtet wird. - Aus ästhetischen Gründen und auch, um den Behälter als Aufstell- und Hängerahmen verwenden zu können, soll die Kontur des Behälters im wesentlichen geschlossen und ohne störende Vorsprünge sein. Andererseits muß der Benutzer den Schieber erfassen können. Deshalb weist der bekannte Behälter an den Schieber angeformt ein Griffstück auf, das von einer Schieberstirnfläche nach innen, auf das Sichtfenster zu, einspringt. Die Gehäuseflächen weisen zu dem Griff komplementäre Aussparungen auf. - Von der Schieberstirnwand erstrecken sich seitliche Holme in den Behälter, die durch eine - dort als Separatorsteg ausgebildete - innere Querwand miteinander verbunden sind. Auf diesen Holmen ruht der Blattstapel, dessen stirnseitige Kante an dem Griffstück anliegt und von der unteren Griffplatte abgestützt ist. - Bei ganz herausgezogenem Schieber ist dabei die dem Gehäuse zugekehrte Querkante des Stapels nur seitlich durch die Schieberholme abgestützt.

Bei stark gewölbten Blättern, insbesondere bei Fotoabzügen, kann deshalb bei Einschieben des Schiebers die Mitte der im Stapel unteren Blätter auf die Endkante des Griff-Ausschnitts stoßen, wodurch die Blätter beschädigt werden.

Gemäß der Erfindung wird eine Lösung dieses Problems durch die im kennzeichnenden Teil des Patentanspruchs 1 genannten Merkmale erreicht.

Nachstehend wird die Erfindung unter Bezugnahme auf die beigefügten Zeichnungen im einzelnen erläutert.

Fig. 1   ist ein Längsschnitt durch eine erste Ausführungsform,
Fig. 2   ist eine analoge Darstellung einer zweiten Ausführungsform,
Fig. 3   ist eine Fig. 3 ist eine Ansicht von unten auf die zweite Ausführungsform bei nur teilweise herausgezogenem Schieber.

In den Zeichnungsfiguren sind Details mit dargestellt, die im Rahmen der vorliegenden Erfindung nicht weitergebildet werden und daher nicht erläutert werden; soweit Gesamtaufbau und Funktionen des Blattwechsels interessieren (die Ausführungsbeispiele stellen Blattwechsler dar), kann auf den eingangs genannten Stand der Technik verwiesen werden.

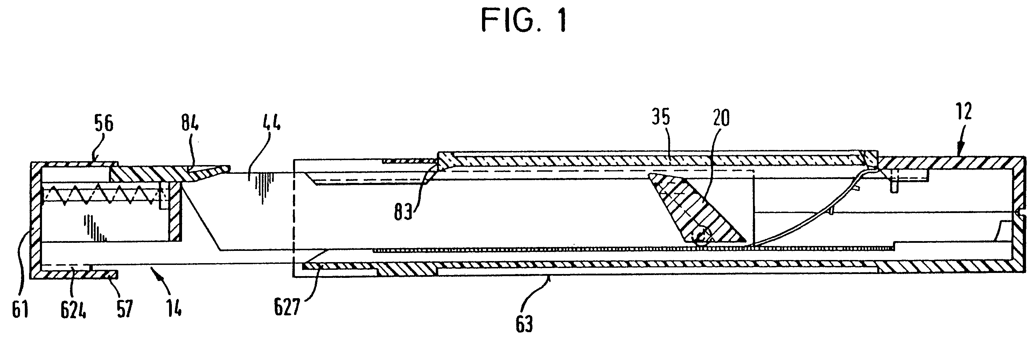

Man erkennt in Fig. 1 das Gehäuse 12 mit Sichtfenster 35, aus dem der Schieber 14 um eine Teilstrecke herausgezogen ist. Der Schieber besteht aus einer Frontwand 61, mit dieser verbundenen Holmen 44, einer inneren Querwand in Form eines Separatorsteges 20 sowie einer Griffbaugruppe, zu der die obere Griffplatte 56 sowie eine untere Griffplatte 57 gehören, die über Verbindungsrippen 624 mit den Holmen verbunden ist. Die untere Griffplatte legt sich beim Einschieben des Schiebers unter eine zu ihr parallele Verlängerungsplatte 627 des Gehäusebodens 63, wobei die Außenseiten der Griffplatten mit den sie umgebenden Außenseiten des Gehäuses im wesentlichen bündig sind.

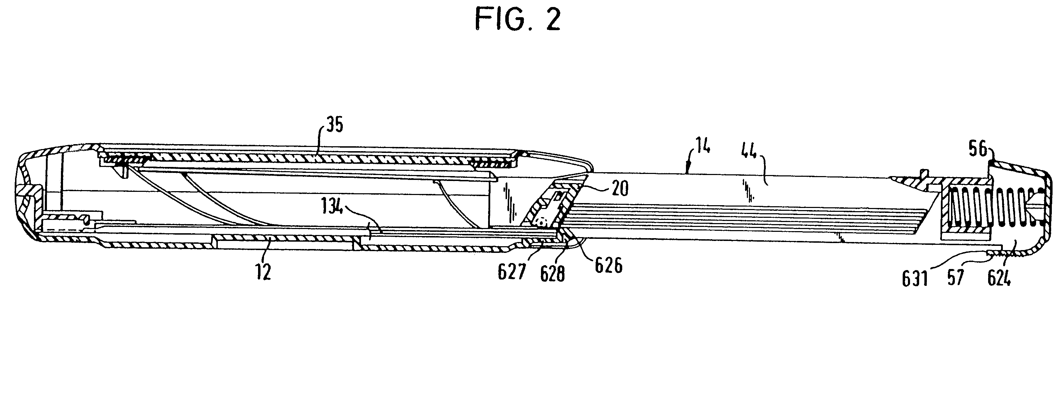

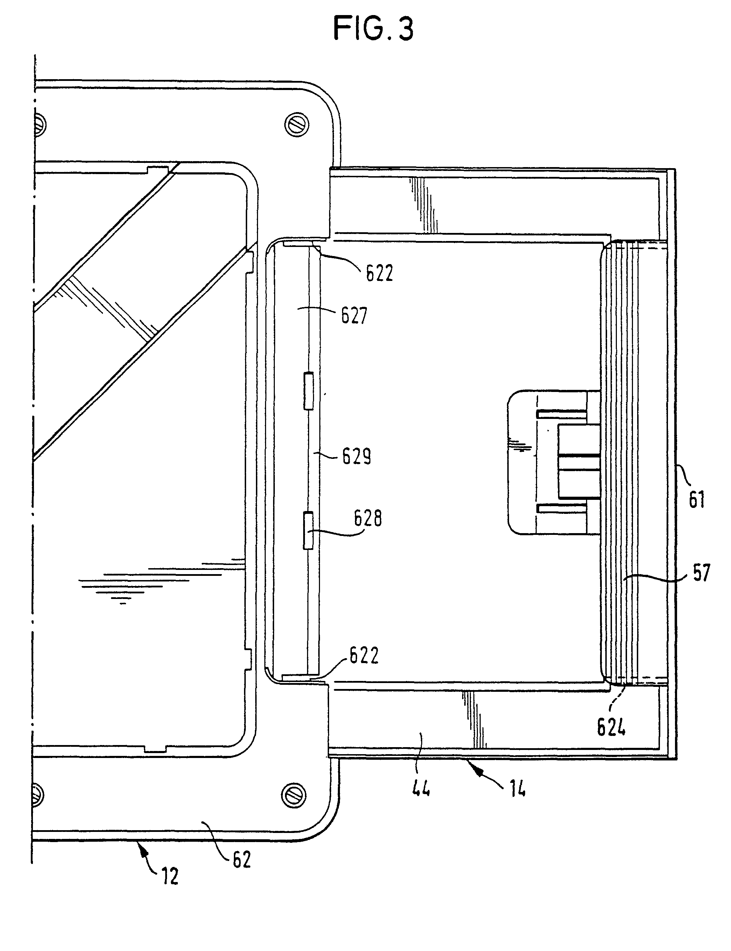

Soweit in Fig. 2 und 3 dieselben Bezugszeichen wie in Fig. 1 verwendet sind, bezeichnen sie entsprechende Bauteile dieser Ausführungsform. Zusätzlich erkennt man noch in Fig. 2, daß die einander gegenüberstehenden Querkanten des Gehäuseabschnitts 627 einerseits, der unteren Griffplatte 57 andererseits jeweils zueinander komplementäre Abschrägungen 631 aufweisen, damit verhindert wird, daß diese Kanten beim Schiebereinschub hart aufeinanderstoßen, wenn etwa die Teile infolge Temperaturschwankungen auch nur geringfügig verformt sein sollten. Auf der der Griffplatte 57 abgewandten Seite trägt der Gehäuseabschnitt Leitelemente 626, deren unterer Hohlraum 628 auch in Fig. 3 erkennbar ist, und zwar sind diese Leitelemente in Schiebereinschubrichtung vor im Gehäuse 12 angeordneten hochstehenden Schienen vorgesehen, damit sie den Blattstapel auf diese Schienen leiten und um zu verhindern, daß die im Stapel unteren Blätter an die Stirnseite der Schienen 134 anstoßen.

Zwar wurde die erfindungsgemäße Gestaltung in den Ausführungsbeispielen nur für die untere Griffplatte 57 erläutert, doch gelten ähnliche Überlegungen auch für die obere Griffplatte. So erkennt man in Fig. 1, daß über einem Griffstück-Schiebeteil, unter der Griffplatte 56 verschieblich angeordnet, nach Einschub in das Gehäuse 12 und Anstoß an die Kante 83, noch ein Teilabschnitt der Gehäusedeckwand liegt, der funktionell mit dem Gehäuseabschnitt 627 vergleichbar ist, da auch diese Maßnahme zwecks Verkürzung des Behälters vorgesehen ist.

## Patentansprüche

1. Behälter für einen Stapel im wesentlichen rechteckiger Blätter mit einem Gehäuse (12) und einem Schieber (14), der zur Entnahme von Blättern aus dem Gehäuse herausziehbar ist und einen Griff (56, 57) aufweist, der sich bei eingeschobenem Schieber entgegen der Auszugsrichtung in eine Aussparung einer Gehäusewandung erstreckt, *dadurch gekennzeichnet*, daß in dieser Aussparung ein Abstützelement (627) vorgesehen ist, das bei herausgezogenem Schieber die gehäusenahen Endkanten der im Schieber liegenden Blätter im Bereich der Aussparung untergreift.

2. Behälter nach Anspruch 1, *dadurch gekennzeichnet*, daß der Schieber aus dem ein Sichtfenster (35) und einen diesem gegenüberliegenden Boden aufweisenden Gehäuse durch eine Gehäuseöffnung herausziehbar ist, die bei eingeschobenem Schieber von einer Schieberstirnwand (61) abgedeckt ist, von der sich eine fensterseitige Griffplatte (56) und eine bodenseitige Griffplatte (57) entgegen der Auszugsrichtung des Schiebers erstrecken und einen Hohlraum begrenzen, in den hinein sich das Abstützelement (627) erstreckt, wenn der Schieber in das Gehäuse eingeschoben ist.

3. Behälter nach Anspruch 1 oder 2, *dadurch gekennzeichnet*, daß die Schieberstirnwand bei eingeschobenem Schieber im wesentlichen bündig mit den die Gehäuseöffnung begrenzenden Gehäusewandungen ist.

4. Behälter nach einem der vorangehenden Ansprüche, *dadurch gekennzeichnet*, daß die Schieberstirnwand über Holme (44), die parallel zur Schieberbewegungsrichtung verlaufen, mit einer inneren Schieberendwand verbunden ist.

5. Behälter nach einem der vorangehenden Ansprüche, *gekennzeichnet durch* einen Wechselmechanismus zum zyklischen Umschichten eines im Behälter befindlichen Blattstapels.

6. Behälter nach Anspruch 4 und 5, *dadurch gekennzeichnet*, daß die innere Schieberendwand als Reststapel-Mitnehmer in Form eines Separatorsteges (20) ausgebildet ist.

7. Behälter nach Anspruch 6, *dadurch gekennzeichnet*, daß in der herausgezogenen Position des Schiebers sich der Separatorsteg (20) über das Abstützelement (627) erstreckt.

8. Behälter nach Anspruch 1, *dadurch gekennzeichnet*, daß der Griff im wesentlichen bündig mit den umgebenden Gehäuseaußenflächen ist.

9. Behälter nach Anspruch 4, *dadurch gekennzeichnet*, daß die bodenseitige Griffplatte (57) mit den Holmen über Rippen (624) verbunden ist, die bei eingeschobenem Schieber in gehäuseseitige komplementäre Schlitze (622) zwischen dem Abstützelement (627) und der umgebenden Gehäusewandung (63) ragt.

10. Behälter nach Anspruch 9, *dadurch gekennzeichnet*, daß die Schieberholme (44) Abstützflächen für die dem Sichtfenster (35) abgekehrte Seite des Stapels aufweisen und die der einen Griffplatte (57) abgekehrte Seite des Abstützelements mit den Abstützflächen im wesentlichen bündig ist.

11. Behälter nach Anspruch 2, *dadurch gekennzeichnet*, daß die bodenseitige Griffplatte (57) und das Abstützelement an ihren bei herausgezogenem Schieber einander zugekehrten Querkanten komplementäre Einlaufschrägen (631) aufweisen.

12. Behälter nach Anspruch 1, *dadurch gekennzeichnet*, daß das Abstützelement von einem Gehäusebodenabschnitt gebildet ist.

13. Behälter nach Anspruch 12, dadurch gekennzeichnet, daß der Gehäusebodenabschnitt Leitelemente (626) zum Führen des vom Schieber eingeschobenen Stapels aufweist.

## Claims

1. Container for a pile of essentially rectangular sheets with a housing (12) and a slider member (14), which can be pulled out to remove the sheets from the housing, and a grip arrangement (56, 57) which when the slider member is in the pushed-in state extends opposite to the direction of withdrawal into a recess in one wall of the housing, *characterized in that* there is provided in this recess a support element (627) which, when the slider member is in the withdrawn state engages in the region of the recess under the end edges, close to the housing, of the sheets lying in the slider member.

2. Container according to claim 1, *characterized in that* the slider member can be pulled out of the housing, which has a viewing window (35) and a base opposite the window, through an aperture in the housing that is covered, when the slider member is in the pushed-in state, by a slider member front wall (61), from which a grip plate (56) on the window side and a grip plate (57) on the base side extend in a direction opposite to the withdrawal direction of the slider member and define a cavity into which the support element (627) extends when the slider member is pushed into the housing.

3. Container according to claim 1 or 2, *characterized in that* when the slider member is in the pushed-in state the slider member front wall is substantially flush with the housing walls defining the housing aperture.

4. Container according to any one of the preceding claims, *characterized in that* the slider member front wall is joined to an inner end wall of the slider member by way of bars (44) that run parallel to the direction of movement of the slider member.

5. Container according to any one of the preceding claims, *characterized by* a change mechanism for the cyclic rearrangement of a pile of sheets located in the container.

6. Container according to claims 4 and 5, *characterized in that* the inner end wall of the slider member is constructed as a residual pile transporter in the form of a separator bar (20).

7. Container according to claim 6, *characterized in that* in the withdrawn position of the slider member the separator bar (20) extends above the support element (627).

8. Container according to claim 1, *characterized in that* the grip arrangement is substantially flush with the surrounding outer faces of the housing.

9. Container according to claim 4, *characterized in that* the grip plate (57) on the base side is connected to the bars by ribs (624) which, when the slider member is in the pushed-in state, project into complementary slots (622) arranged in the housing between the support element (627) and the surrounding housing wall (63).

10. Container according to claim 9, *characterized in that* the slider member bars (44) have support faces for the end of the pile remote from the viewing window (35), and the end of the support element remote from the grip plate (57) is substantially flush with the support faces.

11. Container according to claim 2, *characterized in that* the transverse edges of the grip plate (57) on the base side and of the support element, which face one another when the slider member is in the withdrawn position, have complementary entry slopes (631).

12. Container according to claim 1, *characterized in that* the support element is formed by a portion of the housing base.

13. Container according to claim 12, *characterized in that* the housing base portion has guide elements (626) for guiding the pile pushed in by the slider member.

**Revendications**

1. Récipient pour une pile de feuilles sensiblement rectangulaires, comportant un boîtier (12) et un tiroir (14), qui peut être ressorti pour le prélèvement de feuilles hors du boîtier et comporte une poignée (56, 57), qui, lorsque le tiroir est dans sa position rentrée, s'étend à l'encontre de la direction d'extraction, dans un évidement d'une paroi du boîtier, caractérisé en ce qu'il est prévu, dans cet évidement, un élément de support (627), qui, lorsque le tiroir est sorti, s'engage au-dessous des bords d'extrémité, proches du boîtier, des feuilles situées dans le tiroir, au voisinage de l'évidement.

2. Récipient selon la revendication 1, caractérisé en ce que le tiroir peut être ressorti hors du boîtier, qui comporte un voyant (35) et un fond situé en vis-à-vis de ce voyant, à travers une ouverture du boîtier, qui, lorsque le tiroir est à l'état rentré, est recouvert par une paroi avant (61) du tiroir, à partir de laquelle une plaque de préhension (56) située du côté du voyant et une plaque de préhension (57) située du côté du fond, s'étendent en sens inverse de la direction d'extraction du tiroir et limitent une cavité, dans laquelle l'élément de soutien (627) s'étend lorsque le tiroir est inséré dans le boîtier.

3. Récipient selon la revendication 1 ou 2, caractérisé en ce que, lorsque le tiroir est à l'état inséré, sa paroi avant est sensiblement de niveau avec les parois du boîtier, qui délimitent l'ouverture de ce boîtier.

4. Récipient selon l'une des revendications précédentes, caractérisé en ce que la paroi avant du tiroir est reliée à une paroi intérieure du tiroir au moyen de longerons (44), qui sont parallèles à la direction de déplacement du tiroir.

5. Récipient selon l'une des revendications précédentes, caractérisé par un mécanisme de changement permettant de réaliser le reclassement cyclique d'une pile de feuilles, située dans le récipient.

6. Récipient selon les revendications 4 et 5, caractérisé en ce que la paroi intérieure du tiroir est réalisée sous la forme d'un dispositif d'entraînement de la pile restante, se présentant sous la forme d'une barrette formant séparateur (20).

7. Récipient selon la revendication 6, caractérisé en ce que, lorsque le tiroir est dans la position ressortie, la barrette formant séparateur (20) s'étend au-dessus de l'élément de soutien (627).

8. Récipient selon la revendication 1, caractérisé en ce que la poignée est sensiblement de niveau avec les surfaces extérieures entourant le boîtier.

9. Récipient selon la revendication 4, caractérisé en ce que la plaque de préhension (57) située du côté du fond est reliée aux longerons par l'intermédiaire de nervures (624), qui, lorsque le tiroir est à l'état rentré, pénètrent dans des fentes complémentaires (622) ménagées dans le boîtier entre l'élément de soutien (627) et la paroi (63) entourant le boîtier.

10. Récipient selon la revendication 9, caractérisé en ce que les longerons (44) du tiroir possèdent des surfaces de soutien pour la face de la pile, tournée à l'opposé du voyant (35), et que la face, tournée à l'opposé de l'une des plaques de préhension (57), de l'élément de soutien est sensiblement de niveau avec les surfaces de soutien.

11. Récipient selon la revendication 2, caractérisé en ce que la plaque de préhension (57) située du côté du fond et l'élément de soutien comporte des biseaux d'entrée complémentaires (631). au niveau de leurs bords transversaux tournés l'un vers l'autre lorsque le tiroir est à l'état ressorti.

12. Récipient selon la revendication 1, caractérisé en ce que l'élément de soutien est formé par une section du fond du boîtier.

13. Récipient selon la revendication 12, caractérisé en ce que la section du fond du boîtier comporte des éléments de guidage (626) servant à guider la pile insérée au moyen du tiroir.

# FIG. 1

EP 0 203 168 B1

FIG. 2

FIG.3